(19) Europäisches Patentamt

European Patent Office

Office européen des brevets

(11) **EP 0 854 987 B1**

(12) **EUROPÄISCHE PATENTSCHRIFT**

(45) Veröffentlichungstag und Bekanntmachung des Hinweises auf die Patenterteilung:
**24.01.2001 Patentblatt 2001/04**

(21) Anmeldenummer: **96931200.8**

(22) Anmeldetag: **03.10.1996**

(51) Int Cl.[7]: **F16H 1/32**, F16H 57/02, F16C 19/34

(86) Internationale Anmeldenummer:
**PCT/IB96/01043**

(87) Internationale Veröffentlichungsnummer:
**WO 97/13989 (17.04.1997 Gazette 1997/17)**

(54) **Getriebe und Lager dafür**

Gearbox and bearing therefor

Boîte de vitesses et palier pour la même

(84) Benannte Vertragsstaaten:
**AT BE CH DE DK ES FI FR GB GR IE IT LI LU MC NL PT SE**

(30) Priorität: **06.10.1995 DE 19537227**

(43) Veröffentlichungstag der Anmeldung:
**29.07.1998 Patentblatt 1998/31**

(73) Patentinhaber: **SPINEA s.r.o. Kosice**
**08005 Presov (SK)**

(72) Erfinder: **FECKO, Tibor**
**080 01 Presov (SK)**

(74) Vertreter: **Jeck, Anton, Dipl.-Ing.**
**Patentanwalt,**
**Klingengasse 2**
**71665 Vaihingen/Enz (DE)**

(56) Entgegenhaltungen:
**EP-A- 0 594 549        WO-A-95/22017**
**DE-C- 859 699         GB-A- 969 883**
**US-A- 3 275 391        US-A- 3 814 488**
**US-A- 4 479 683**

**Beschreibung**

Die Erfindung betrifft ein Getriebe nach dem Oberbegriff des Anspruches 1 und ein Lager dafür nach dem Anspruch 17.

Bei herkömmlichen Getrieben der eingangs genannten Art, wie sie z.B. in der W095/22017 beschrieben sind, sind die Ausgangskörper im Grundkörper über zylindrische Elemente gelagert. Dabei sind mehrere Laufräume vorgesehen, in denen entweder radial oder axial ausgerichtete Wälzkörper angeordnet sind. Dies hat zur Folge, daß das Getriebe in axialer Richtung eine unerwünschte Abmessung erhält. Ein weiterer Nachteil, mit dem das herkömmliche Getriebe behaftet ist, besteht darin, daß mindestens zwei Laufräume, die mit hohe Präzision aufweisenden Lagern bestückt sind, vorhanden sein müssen. Dies macht die Herstellung des Getriebes nicht nur aufwendig, sondern auch kostenintensiv.

Ferner ist in der GB 969 883 A ein herkömmliches Lager mit einem Außenring und einem Innenring offenbart, dessen zylindrische Wälzkörper axial und radial ausgerichtet sind.

Andererseits sind z.B. in den US-Patentschriften 1,269,235, 3,275,391, 3,814,488, 4,479,683 oder DE-Patentschrift 859 699 Lager offenbart, die dazu geeignet sind, radiale und axiale Kräfte zu übertragen, und aus einem Außenring, einem Innenring und Führungselementen (Käfige oder Trennkörper), für die zwischen den Ringen gelagerten zylindrischen Wälzkörper bestehen. Die mit hoher Präzision und kostenintensiv herstellbaren Ringe mit

definierten radialen und axialen Wandstärken haben allerdings den Nachteil, daß sie während ihres Einsatzes selbst Raum in Anspruch nehmen, und zwar auf Kosten des geführten Teiles. Ein Nachteil der herkömmlichen Lager ist schließlich auch darin zu sehen, daß die Lager an die Teile individuell angepaßt werden müssen. Dies betrifft insbesondere die Maße (axiale Länge und radiale Dicke) der Ringe.

Ausgehend von dem obigen Stand der Technik liegt der Erfindung die Aufgabe zugrunde, hier Abhilfe zu schaffen.

Die gestellte Aufgabe wird erfindungsgemäß durch die Merkmale des Anspruches 1, bzw. 17 gelöst.

Man erkennt, daß die Erfindung jedenfalls dann verwirklicht ist, wenn zwischen dem Grundkörper und dem Ausgangskörper mindestens ein ringförmiger Hohlraum ausgebildet ist, der als Laufraum für Wälzkörper dient, wobei in diesem Laufraum vorzugsweise nur zylinderförmige Wälzkörper, also kein zusätzlicher Außenring, Innenring bzw. Käfig, gelagert sind, von denen einige so ausgerichtet sind, daß sie die in axialer Richtung des Getriebes wirkenden Kräfte zwischen dem Grundkörper und dem Ausgangskörper auffangen, während die anderen Wälzkörper in etwa orthogonal zu den erstgenannten Wälzkörpern ausgerichtet und dazu vorgesehen sind, die zwischen dem Grundkörper und dem Ausgangskörper wirkenden Radialkräfte aufzufangen. Besonders vorteilhaft ist es, Wälzkörper vorzusehen, deren radialer Querschnitt kreisrund ist. Dieser Querschnitt kann dabei konstant sein, er kann jedoch auch von der Mitte des Wälzkörpers zu seinen beiden Enden hin kontinuierlich zunehmen bzw. abnehmen. In der einfachsten Ausführung der Erfindung werden jedoch bevorzugt herkömmliche, mit hoher Genauigkeit herstellbare Wälzkörper in Form von Zylindern eingesetzt. In solchen Fällen wird eine besonders genaue Lagerung des Ausgangskörpers schon dann erreicht, wenn die im Ausgangskörper und im Grundkörper ausgebildeten Laufflächen entsprechend bearbeitet und ausgebildet sind. Dies ist jedoch bereits mit minimalem technischen Aufwand möglich, zumal es ausreicht, wenn in den beiden Körpern jeweils eine Stufe ausgebildet ist, die gemeinsam den erforderlichen Laufraum definieren. Durch die vorgeschlagenen Maßnahmen wird ein Getriebe geschaffen, bei dem die Funktion der herkömmlichen Lager-Ringe von dem Grundkörper und dem Ausgangskörper übernommen wird. Das Getriebe wird somit ein Teil des Lagers bzw. das Lager ein integraler Bestandteil des Getriebes. Eine Individualisierung des Lagers in bezug auf das Getriebe erfolgt nicht und ist auch nicht mehr notwendig. Dies hat jedoch zur Folge, daß die Wälzkörper im äußersten radialen Außenbereich des Ausgangskörpers angeordnet werden können, ohne jedoch den Außendurchmesser des scheibenförmigen Ausgangskörpers verkleinern zu müssen. Diese Maßnahmen werden vorteilhaft bei Getrieben mit hoher Übersetzung genutzt.

Weitere zweckmäßige und vorteilhafte Ausgestaltungen der Erfindung gehen aus den Unteransprüchen hervor.

Einige Ausführungsbeispiele der Erfindung sind in der Zeichnung schematisch dargestellt und werden im folgenden näher erläutert. Es zeigen

Fig. 1        ein Getriebe in Explosionsdarstellung,

Fig. 2        das in Fig. 1 dargestellte Getriebe in zusammengebautem Zustand und axialem Querschnitt,

Fig. 3        einen Schnitt entlang der Linie III-III nach Fig. 2,

Fig. 4        ein weiteres Getriebe in axialem Querschnitt,

Fig. 5        einen Teil des Lagers vergrößert dargestellt,

Fig. 6        ein Getriebe mit einem Kreuz im Querschnitt,

Fig. 7        einen Schnitt entlang der Linie VIII nach Fig. 6 und

Fig. 8, 8a, 8b einen Positionierkörper in Draufsicht, Seitenansicht und im Querschnitt.

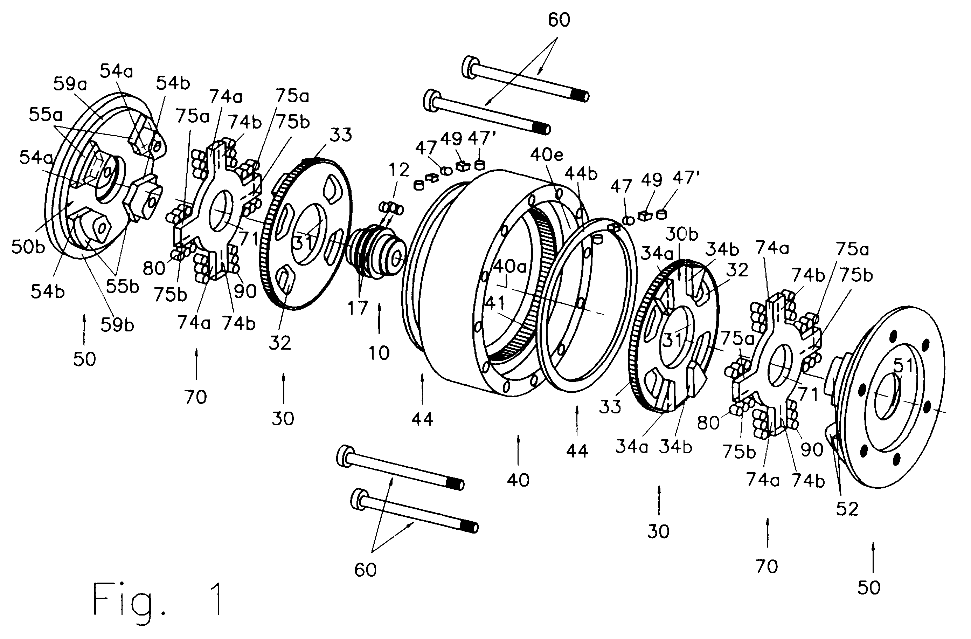

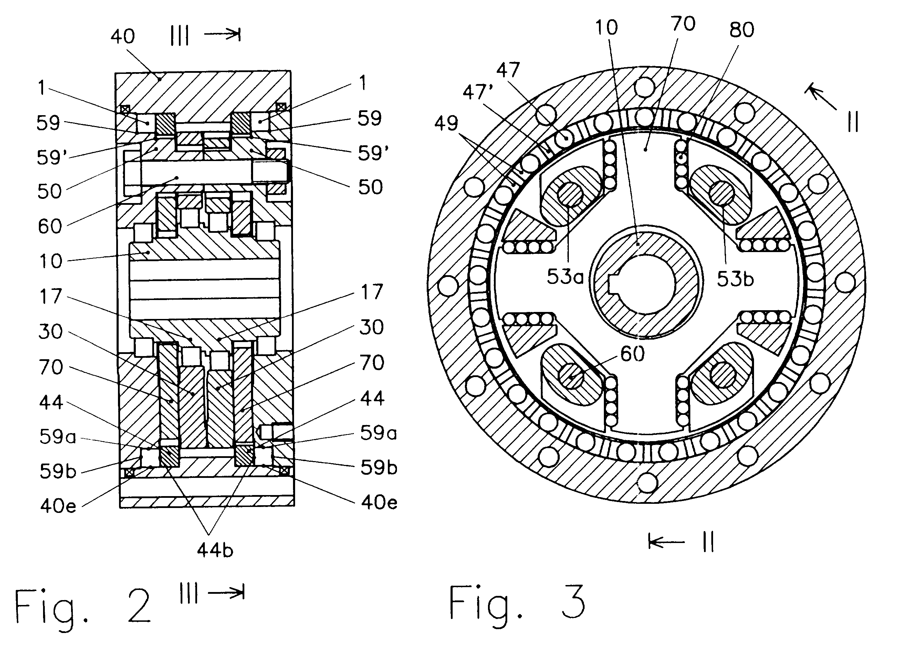

In den Figuren 1, 2 und 3 ist ein Getriebe dargestellt. Die Eingangswelle 10 mit Zylinderrollen 12 weist zwei exzentrische Abschnitte 17 auf, die um 180° verdreht sind. Die Abschnitte 17 tragen drehbar gelagerte Räder 30 mit Außenverzahnungen 33 und zentralen Öffnungen 31. Die Räder 30 haben mehrere durchgehende axiale Öffnungen 32, die um die Achse der Räder 30 gleichmäßig verteilt sind. Am Umfang der Exzenter 17 sind Laufbahnen für Zylinder ausgebildet, die als Lagerkörper für die Räder 30 dienen. Die Eingangswelle 10 ist mit der Motorwelle eines Antriebsmotors mittels einer nicht näher dargestellten Feder verbunden. Der Motor ist mit einem als Rad ausgebildeten Grundkörper 40 mit Innenverzahnung 41 mittels eines Körpers und Schrauben verbunden. Die Räder 30 sind in der Mitte zwischen den als kreisrunde Flansche ausgebildeten Ausgangskörpern 50 angeordnet, die durch Verbindungselemente 60 miteinander verbunden sind. Die Verbindungselemente 60 durchqueren kontaktfrei die Öffnungen 32 der Räder 30, so daß die Flansche 50 miteinander fest verbindbar sind. Das Flansch-Paar 50 ist in bezug auf das Rad 40 mit Innenverzahnung 41 drehbar gelagert. Das Rad 40 kämmt mit der Außenverzahnung der Räder 30. Die Achsen der Räder 30 sind parallel zur Achse 40a des Rades 40 angeordnet, jedoch um eine Exzentrizität e versetzt. Die Flansche 50 sind mit Führungsflächen/bahnen 54a, 54b versehen, die eine lineare Führung 50b definieren. Die Führung 50b ist quer zur Achse des Flansches 50 orientiert. Jedes Rad 30 ist mit Führungsbahnen 34a, 34b versehen, die eine lineare Führung 30b definieren, wobei diese lineare Führung quer zur Achse des Rades 30 orientiert ist. An beiden Seiten des Getriebes ist zwischen dem Flansch 50 und dem Rad 30 ein als Kreuz ausgebildeter transformierender Körper 70 angeordnet. Der transformierende Körper 70 besitzt in zwei orthogonal zueinander angeordneten Richtungen Bahnen 74a, 74b bzw. 75a, 75b, und zwar derart, daß diese Bahnen in zwei senkrecht zueinander verlaufenden Richtungen verschieblich angeordnet sind. Die eine lineare Führung ist am Flansch 50 ausgebildet, während der Körper 70 in der anderen Richtung in der Führung 30b am Rad 30 verschieblich angeordnet ist. Beide Flansche 50 und der Körper 70 besitzen zentrale Öffnungen 51 bzw. 71. Die Eingangswelle 10 ist an ihren beiden Enden in den Zentralöffnungen 51 der Flansche 50 gelagert. Die Eingangswelle 10 durchquert kontaktfrei die Öffnung 71 des Körpers 70. Der Innendurchmesser der Öffnung 71 ist hierbei um mindestens 2e größer als der Außendurchmesser der Eingangswelle-Partie, welche die Öffnung 71 durchquert. Die Führungsflächen 54a und 54b, mit denen jeder Flansch 50 versehen ist, sind an den einander gegenüberliegenden Seiten der Anschläge 55a und 55b ausgebildet. Die Anschläge 55a und 55b sind als achsensymmetrische Paare ausgebildet und an der Stirnseite des Flansches angeordnet. Die Führungsflächen 54a und 54b sind direkt an den Anschlägen 55a und 55b des Flansches 50 ausgebildet. Sie können auch als flache Leisten ausgebildet sein, die an den gegenüberliegenden Seiten der Anschläge 55a, 55b befestigt sein können. Durch die Anschläge 55a, 55b der Flansche 50 führen axiale Öffnungen/Bohrungen 53a, 53b. Die Führungsbahnen, mit denen jedes Rad 30 versehen ist, sind an den gegenüberliegenden Seiten der Anschläge 35b ausgebildet. Sie sind durch mittig gegenüberliegende Paare gebildet, die an der Stirnseite des Rades 30 vorhanden sind. Die axialen Öffnungen 32 des Rades 30 sind auf einem Kreis zwischen Anschlägepaaren angeordnet. Die Führungsbahnen 34a, 34b sind direkt an den Anschlägen 55a, 55b des Rades 30 ausgebildet. Sie können jedoch auch als flache Leisten ausgebildet sein, die fest an den gegenüberliegenden Seiten der Anschläge ausgebildet sind.

Der Körper 70 ist mit vier Schenkeln/Armen versehen, die von einem Ringabschnitt getragen sind. Das eine Paar gegenüberliegender Arme weist Führungsbahnen auf, durch die der Körper 70 in der linearen Führung 50b des Flansches 50 verschieblich angeordnet ist. Das zweite Paar der gegenüberliegenden Arme weist ebenfalls parallele Führungsbahnen auf, durch welche der Körper 70 in der linearen Führung 30b des Rades 30 verschieblich angeordnet ist. Zwischen den Führungsflächen 54a und 54b der linearen Führung des Flansches 50 und den Führungsflächen des Körpers 70, durch welche der Körper 70 in der linearen Führung 50b verschieblich angeordnet ist, sind zylindrische Wälzkörper 80 angeordnet. Genauso ist es verwirklicht auch bei den Führungsbahnen 34a und 34b der linearen Führung 30b am Rad 30 und den Bahnen des Körpers 70, in denen der Körper 70 verschieblich angeordnet ist. In beiden Fällen ist eine Führung des Körpers 70 mittels Wälzkörper 80, 90 gewährleistet, wenn er in bezug auf das Rad sowie in bezug auf den Flansch 50 und die Achse 40a relative Oszillationsbewegungen ausübt. Die Innenverzahnung 41 des Rades 40 besteht aus Zylindern, die in Axialnuten gelagert sind. Die Axialnuten sind am Innenumfang des Rades 40 gleichmäßig verteilt. Es handelt sich somit um Zahnräder, deren Zähne vorzugsweise aus Zylindern bestehen. Das gleiche gilt auch für die Außenverzahnung 33 des Rades 30, die aus Körpern mit kreisrundem Querschnitt besteht. Die Körper sind ebenfalls in Axialnuten gelagert. Die Axialnuten sind am Außenumfang des Rades 30 gleichmäßig verteilt. Im Kontaktbereich der Flansche 50 und des Rades 40 sind radiale Umlaufbahnen bzw. Laufräume 1 ausgebildet, in denen die Zylinder 47, 47' mit Positionierkörpern 49 gelagert sind. Durch axiale Abstandsringe 44 kann die gewünschte Vorspannung der Lager in axialer Richtung erreicht werden.

Weitere Einzelheiten bezüglich eines solchen Getriebes sind in der WO 95/22017 offenbart.

An den Anschlägen 55a und 55b des Flansches 50 sind Distanzelemente 52 angeordnet. Diese Distanzelemente 52 durchqueren mit Spiel die axialen Öffnungen 32 des Rades 30, wobei sie mit axialen Öffnungen 53a, 53b versehen sind. Diese Öffnungen sind von den Verbindungselementen 60 durchquert. Durch Anziehen der Schraubenmuttern definieren die Stirnseiten der Distanzelemente 52 die Lage der beiden Flansche.

Ferner lassen die Figuren 2, 4 und 6 erkennen, daß zwischen dem Grundkörper 40 und den Ausgangskörpern 50 (Flansche) zwei ringförmige Laufräume 1 mit Laufflächen 40e, 44b, 59a und 59b für zylinderähnliche Wälzkörper 47, 47' ausgebildet sind. Einige der Wälzkörper 47 sind in bezug auf die Drehachse 40a des Getriebes in etwa axial ausgerichtet, während die anderen Wälzkörpr 47' in etwa radial positioniert sind. Der Laufraum 1 ist im axialen Querschnitt des Getriebes vierekkig, im vorliegenden Ausführungsbeispiel quadratisch. Dabei bilden die Laufflächen 40e, 44b, 59a und 59b Laufflächenpaare 40e, 59a sowie 44b, 59b. Die Besonderheit dieser Laufflächenpaare besteht im übrigen darin, daß sie einander gegenüberliegende parallele Flächen definieren, von denen die jeweils eine Fläche im Grundkörper 40 bzw. Abstandsring 44 ausgebildet ist, während die jeweils gegenüberliegende Fläche im Ausgangskörper 50 ausgebildet ist. Ist der Abstandsring 44 nicht vorgesehen, dann ist die Lauffläche 44b direkt am Grundkörper 40 gebildet. Ähnlich verhält es sich mit den anderen Laufflächen 40e, 59a, 59b, die einerseits Teil von Lagerringen (die mit dem Grundkörper 40 bzw. Ausgangskörper 50 betriebsgemäß verbindbar sind) und andererseits auch Teil vom Grundkörper 40 bzw. Ausgangskörper 50 sein können. Abhängig davon werden auch die Werkstoffe des Grund- bzw. Ausgangskörpers 40,50 gewählt. Hierbei sind die jeweils benachbarten Laufflächen in etwa rechtwinklig zueinander angeordnet. Die Laufräume 1 werden bevorzugt dadurch erreicht, daß der Ausgangskörper 50 im Lagerbereich eine umlaufende Stufe 59 aufweist, deren Wände die Laufflächen 59a und 59b definieren. Dabei ist die Stufe 59 zur Achse 40a des Getriebes hin abgesetzt und nach innen bzw. außen zu gerichtet. Im Ausgangskörper 40 ist eine ergänzende Stufe 59' zur Aufnahme des Ringes 44 ausgebildet. Um die Herstellungskosten des Getriebes zu minimieren, ist vorgesehen, daß die der radial ausgerichteten Lauffläche 59b des Ausgangskörpers 50 gegenüberliegende radiale Lauffläche 44b Teil des im Getriebe angeordneten Ringes 44 ist. Dabei ist die radiale Dicke des Ringes 44 größer gewählt als die radiale Höhe des Laufraumes 1. Die axiale Stirnseite des Ringes 44 kann besonders einfach bearbeitet werden, um die gewünschten Eigenschaften eines Lagers zu gewährleisten.

Ferner ist den Figuren 1, 3 und 5 zu entnehmen, daß die axiale Länge der Wälzkörper 47, 47' kleiner ist als deren Durchmesser und daß zwischen jeweils zwei benachbarten Wälzkörpern 47, 47' jeweils ein Positionierkörper 49 angeordnet ist, der konkave, mit den Wälzkörpern 47, 47' in formschlüssigem Kontakt stehende Wälzflächen 49a, 49b aufweist. Dabei sind die Achsen der Wälzflächen 49a, 49b parallel zu den Achsen der zugeordneten Wälzkörper 47, 47' ausgerichtet. Die übrigen Flächen 49c, 49d und 49 e der Positionierkörper 49 stehen mit den Laufflächen 40e, 44b, 59a und 59b in Kontakt. Die Laufflächen können ein modifiziertes Profil haben und z.B. im Querschnitt konvex sein, wodurch ein besseres Abrollen und geringeres Abnutzen des Wälzkörpers 47,47'erfolgt.

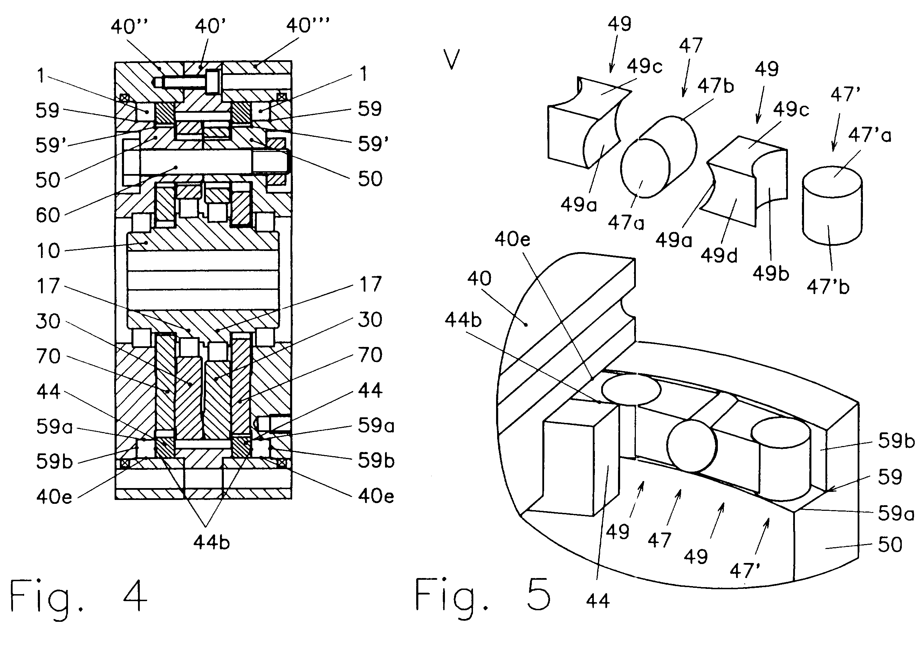

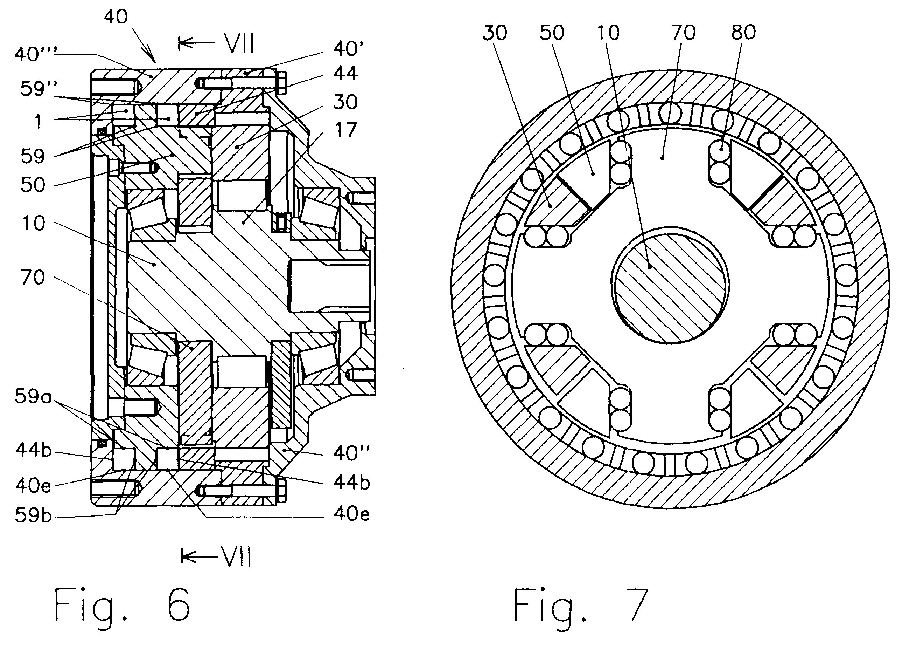

Die Besonderheit des in Figur 4 dargestellten Getriebes besteht darin, daß der Grundkörper 40 aus drei miteinander verbindbaren Ringen 40', 40" und 40''' besteht, wobei der Ring 40' als ein Rad mit Innenverzahnung 41 ausgebildet ist. Das Rad 40' besteht hierbei aus hochwertigem Werkstoff, z.B. Stahl, während die Ringe 40" und 40''' diese Voraussetzungen nicht unbedingt erfüllen müssen. Bei den Ringen 40" und 40''' handelt es sich in bezug auf das Rad 40' nicht unbedingt um hochpräziese herstellbare Teile. Es reicht vielmehr aus, wenn deren Laufflächen 40e, die mit den Wälzelementen 47 in Kontakt stehen, die erforderliche Präzision aufweisen. Wie insbesondere die Fig. 5 erkennen läßt, bilden die Wälzelemente 47, 47' und die Positionskörper 49 zusammen mit dem Grundkörper 40 und dem Ausgangskörper 50 ein Lager mit einen Laufraum 1. Dabei gewährleisten die Positionskörper 49, daß die Wälzelemente 47 und 47' die vorgesehene Position einnehmen und beibehalten. Allgemein könnten die Achsen der Wälzelemente 47 in bezug auf die Achse 40a des Getriebes einen Winkel einschließen, der 5°, 10° oder sogar 30° beträgt. Das gleiche gilt auch für die Wälzelemente 47', die in bezug auf diese Achse 40a einen Winkel von 85°, 80° oder 70° einschließen können. Eine besonders gute Übertragung der von den Ausgangskörpern 50 herrührenden Kräfte auf den Grundkörper 40 ist jedoch dann erreichbar, wenn die Achsen der Wälzelemente 47 und 47' im wesentlichen parallel bzw. senkrecht zur Achse 40a verlaufen.

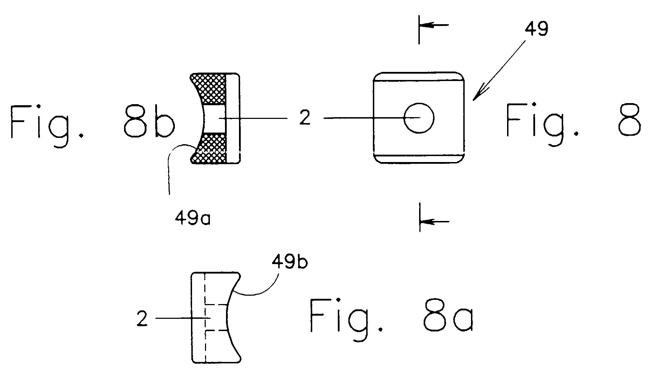

Bei den Ausführungen gemäß Fig. 6 und 7 handelt es sich um ein Getriebe mit einem Kreuz 70 und zwei Laufräumen 1, in denen axial und radial ausgerichtete Wälzkörper 47, 47' gelagert sind. Die Laufräume 1 befinden sich jedoch nur auf der einen Seite des Kreuzes 70, daher ist hier nur ein Ausgangskörper 50 vorhanden. Verbindungselemente 60 sind hier also nicht mehr erforderlich. Der Grundkörper des Getriebes besteht aus einem Kranz 40', einem Lagerring 40''' und einem Abschluß 40". Schließlich zeigen die Fig. 8, 8a, 8b einen Positionierkörper 49 mit einer Öffnung 2, in der Schmierstoff für das Lager untergebracht sein kann.

Das aus den Wälzelementen 47, 47' und den Positionskörpern 49 gebildete Lager kann vorgefertigt sein und sodann in den Laufraum 1 eingelegt werden. Diese Teile können in den Laufraum 1 jedoch auch direkt einzeln eingebracht werden. Im ersten Fall kann so vorgegangen werden, daß die Wälzelemente und die Positionierkörper durch Bindemittel, die sich im Lauf der Benutzung des Getriebes auflösen können, zusammengehalten werden. Diese Bindemittel können im Schmierstoff eingebettet sein.

Ganz allgemein handelt es sich hier um ein Getriebe mit einem als Rad mit Innenverzahnung 41 ausgebildeten Grundkörper 40, mit mindestens einem in bezug auf das Rad drehbar gelagerten Ausgangskörper 50 sowie mit einer Eingangswelle 10 mit mindestens einem exzentrischen Abschnitt 17, auf dem mindestens ein mit der Innenverzahnung 41 kämmendes Rad 30 mit Außenverzahnung 33 gelagert ist. Dabei ist zwischen dem Rad 30 und dem jeweiligen Ausgangskörper 50 jeweils ein die Planetenbewegungen des Rades 30 in Rotationsbewegungen des Ausgangskörpers 50 transformierender Körper 70 angeordnet. Die Ausgangskörper 50,50 sind mit Abstand zueinander angeordnet und miteinander unverdrehbar verbindbar.

Das in den Fig. 6 und 7 dargestellte Getriebe weist nur einen transformierenden Körper 70 und zwei Ausgangskörper 50 auf. Um die Umwucht des Körpers 70 auszugleichen, ist ein Gegengewicht vorgesehen. Ferner ist die Exzentrizität angedeutet, also der Abstand zwischen der Achse 30a des Rades 30 und der Achse 40a des Grundkörpers 40.

Die Erfindung betrifft auch ein Lager für ein gattungsgemäßes Getriebe, das zylindrische Wälzkörper 47, 47' aufweist, die im Laufraum 1 mit Laufflächen 40e, 44b, 59a und 59b angeordnet sind. Dabei sind einige der Wälzkörper 47 in bezug auf die Drehachse 40a des Getriebes in etwa axial ausgerichtet, während die übrigen Wälzkörper 47' in etwa radial positioniert sind.

Die durch die Erfindung erreichten Vorteile können wie folgt zusammengefaßt werden:

- Eine erhebliche Verringerung der Anzahl von Einzelteilen, die für die Lagerung des Ausgangskörpers 50 in bezug auf den Grundkörper 40 bestimmt sind, denn Ringe (Außen- und Innenring) sowie Käfige für die Wälzkörper 47, 47' sind nicht mehr erforderlich.

- Das vorgeschlagene Lager ist vom Typ des Getriebes, insbesondere Größe und Art, unabhängig.

- Das Lager kann im äußersten radialen Außenbereich des Ausgangskörpers 50 angeordnet sein, also im Bereich, in dem die maximale Kräfteübertragung vom Grundkörper 40 auf den Ausgangskörper 50 erfolgt. Dadurch kann auch der Innenraum des Getriebes besser genutzt werden.

- Die Bearbeitung des Ausgangs- und/oder Grundkörpers bezüglich der Herstellung eines Laufraumes 1 ist einfach, zumal sich diese Maßnahmen in der Ausbildung einer Stufe erschöpfen.

- Es werden nur herkömmliche, bewährte und in Massenproduktion mit hoher Präzision herstellbare Teile, nämlich zylinderförmige Wälzkörper 47, 47', eingesetzt, die keiner Individualisierung bedürfen.

**[0023]** - Maximalisierung des Außen- und des Innendurchmessers beim Ausgangs- und dem Grundkörper 50,40, also auch bei den Verzahnungen 33,41, wodurch das Moment ($\vec{M}=\vec{r}\times\vec{F}$) bei konstanter Kraft vergrößert werden kann. Aufgrund dieser Tatsache ist es möglich, auch andere Teile des Getriebes, z.B. die Eingangswelle 10, Körper 70 usw., größer zu gestalten.

**[0024]** - Die Herstellung des Laufraumes 1 wird deutlich vereinfacht, und sein Vermessen kann bereits während seiner Herstellung kontinuierlich erfolgen. Herkömmliche Laufräume, die in bezug auf die Achse 40 um etwa 45 ° geneigt sind, also in Form einer doppelten V-Nut ausgebildet sind, von denen die eine V-Nut im Ausgangskörper 50 ausgebildet ist, während die andere V-Nut im Grundkörper 40 ausgebildet ist, haben eine solche Kummulation von Vorteilen nicht. Dies folgt daraus, daß eine rechteckförmige und axial sowie radial nach außen hin offene Stufe (vgl. Fig. 5) im Grundkörper 40 bzw. Ausgangskörper 50 erfahrungsgemäß einfacher, schneller und genauer herstellbar ist als eine radial offene V- förmige Nut (Einstich)in denselben Körpern. Zudem müssen im Falle eines Laufraumes in Form einer doppelten V-Nut entweder der Grundkörper 40 und/ oder der Ausgangskörper 50 aus zwei Teilen bestehen, die in Richtung der Achse 40a zusammenfügbar sind, was regelmäßig mittels Schrauben erfolgt. Ein aus zwei Teilen zusammengefügter Körper 40 oder 50 hat allerdings in bezug auf die Lagerung der Wälzkörper 47,47' ganz andere Eigenschaften (Festigkeit, Genauigkeit, Spiel usw.) als ein einstückiger Körper gemäß der Erfindung, was sich unmittelbar auf die wesentlichen Eigenschaften (Stabilität, Kompaktheit usw.) des Getriebes auswirkt.

**[0025]** - Nicht zuletzt ist aber auch auf die Tatsache hinzuweisen, daß im Laufraum 1 gemäß der Erfindung die Kräfteübertragung direkt erfolgt, während bei V-förmigen Nuten (Einstich) immer mehrere Kraftkomponenten (die Resultierende ist die Summe zweier KraftVektoren) vorhanden sind, was unerwünscht ist.

**Patentansprüche**

1. Getriebe, insbesondere Planetengetriebe, mit einem Grundkörper (40), mit einem radial und axial drehbar gelagerten Ausgangskörper (50) sowie mit mindestens einem zwischen den beiden Körpern (40, 50) ausgebildeten ringförmigen Laufraum (1) für zylinderähnliche Wälzkörper (47, 47') mit unterschiedlich orientierten Drehachsen, wobei einige Wälzkörper (47) in etwa parallel zur Achse (40a) des Grundkörpers (40) verlaufen, während die übrigen Wälzkörper (47') in etwa senkrecht zur Achse (40a) orientiert sind, und daß der Laufraum (1) mit Laufflächen (40e, 44b, 59a, 59b) versehen ist, dadurch gekennzeichnet, daß im Laufraum (1) die Wälzkörper (47, 47') alternativ gekreuzt sind und daß der Abstand der einander gegenüberliegenden Laufflächen (40e, 59a, 44b, 59b) in etwa dem Durchmesser der Wälzkörper (47, 47') entspricht.

2. Getriebe nach Anspruch 1, dadurch gekennzeichnet, daß alle jeweils benachbarten Wälzkörper (47, 47') alternativ gekreuzt sind.

3. Getriebe nach Anspruch 1, dadurch gekennzeichnet, daß der Laufraum (1) in axialem Querschnitt des Getriebes viereckig ist.

4. Getriebe nach einem der Anspruch 1 bis 3, dadurch gekennzeichnet, daß die jeweils benachbarten Laufflächen (40e, 44b, 59a, 59b) in etwa rechtwinklig zueinander angeordnet sind.

5. Getriebe nach einem der Ansprüche 1 bis 4, dadurch gekennzeichnet, daß der Ausgangskörper (50) und/oder der Grundkörper (40) im Lagerbereich eine umlaufende Stufe (59) aufweisen, deren Wände die Laufflächen (59a, 59b) definieren.

6. Getriebe nach einem der Ansprüche 1 bis 5, dadurch gekennzeichnet, daß die Stufe (59) zur Achse (40a) des Getriebes hin abgesetzt ist.

7. Getriebe nach einem der Ansprüche 1 bis 6, dadurch gekennzeichnet, daß im Grundkörper (40) und/oder im Ausgangskörper (50) eine in bezug auf die Stufe (59) ergänzende Stufe (59', 59'') ausgebildet ist.

8. Getriebe nach einem der Ansprüche 1 bis 7, dadurch gekennzeichnet, daß die der radial ausgerichten Lauffläche (59b) des Ausgangskörpers (50) gegenüberliegende radiale Lauffläche (44b) Teil eines im Getriebe angeordneten Ringes (44) ist.

9. Getriebe nach Anspruch 8, dadurch gekennzeichnet, daß die radiale Dicke des Ringes (44) größer ist als die radiale Höhe des Laufraumes (1).

10. Getriebe nach einem der Ansprüche 1 bis 9 mit zylindrischen Wälzkörpern (47, 47'), dadurch gekennzeichnet, daß die axiale Länge der Wälzkörper (47, 47') kleiner ist als deren Durchmesser.

11. Getriebe nach einem der Ansprüche 1 bis 10, dadurch gekennzeichnet, daß zwischen jeweils zwei benachbarten Wälzkörpern (47, 47') jeweils ein Positionierkörper (49) angeordnet ist, der vorzugsweise mindestens eine Öffnung (2) für Schmierstoffe aufweist.

12. Getriebe nach Anspruch 11, dadurch gekennzeichnet, daß der Positionierkörper (49) konkave, mit den Wälzkörpern (47, 47') in formschlüssigem Kontakt stehende Wälzflächen (49a, 49b) aufweist.

13. Getriebe nach Anspruch 12, dadurch gekennzeichnet, daß die Achsen der Wälzflächen (49a, 49b) parallel zu den Achsen der zugeordneten Wälzkörper (47, 47') verlaufen.

14. Getriebe nach einem der Ansprüche 11 bis 13, dadurch gekennzeichnet, daß die übrigen Flächen (49c, 49d, 49e) der Positionierkörper (49) zu den Laufflächen (40e, 44b, 59a, 59b) mit Abstand angeordnet sind.

15. Getriebe nach einem der Ansprüche 1 bis 14 mit mindestens einem als Rad mit Innenverzahnung (41) ausgebildeten Grundkörper (40), mit mindestens einem in bezug auf das Rad drehbar gelagerten Ausgangskörper (50) sowie einer Eingangswelle (10) mit mindestens einem exentrischen Abschnitt (17), auf dem mindestens ein mit der Innenverzahnung (41) kämmendes Rad (30) mit Außenverzahnung (39) drehbar gelagert ist, wobei zwischen dem Rad (30) und dem Ausgangskörper (50) ein die Planetenbewegungen des Rades (30) in Rotationsbewegungen des Ausgangskörpers (50) transformierender Körper (70) angeordnet ist.

16. Getriebe nach Anspruch 15 mit zwei mit Abstand zueinander angeordneten Ausgangskörpern (50, 50), die miteinander unverdrehbar verbindbar sind.

17. Lager für Getriebe nach einem der Ansprüche 1 bis 16 mit zylindrischen Wälzkörpern (47, 47'), die in einem Laufraum (1) des Getriebes mit Laufflächen (40e, 44b, 59a, 59b) angeordnet sind, dadurch gekennzeichnet, daß einige der Wälzkörper (47) in bezug auf die Drehachse (40a) des Getriebes in etwa axial ausgerichtet sind, während die anderen Wälzkörper (47') in etwa radial positioniert sind.

18. Lager nach Anspruch 17, dadurch gekennzeichnet, daß zwischen jeweils zwei benachbarten Wälzkörpern (47, 47') jeweils ein Positionierkörper (49) angeordnet ist.

19. Lager nach Anspruch 18, dadurch gekennzeichnet, daß der Positionierkörper (49) aus Kunststoff oder Metall besteht.

## Claims

1. Gear, more especially a planetary gear, having a main body member (40), with a radially and axially rotatably mounted output member (50), and at least one annular chamber (1) provided between the two members (40, 50) for cylinder-like rolling bodies (47, 47') having differently orientated axes of rotation, some of the rolling bodies (47) extending substantially parallel to the axis (40a) of the main body member (40), while the remaining rolling bodies (47') are orientated substantially perpendicular relative to the axis (40a), the chamber (1) being provided with running surfaces (40e, 59a, 44b, 59b), characterised in that in the chamber (1) the rolling bodies (47, 47') are alternatively crossed, and the distance between the opposed running faces (40e, 59a, 44b, 59b) corresponds substantially to the diameter of the rolling bodies (47, 47').

2. Gear according to Claim 1, characterised in that all the rolling bodies (47, 47') adjacent to one another are alternatively crossed.

3. Gear according to Claim 1, characterised in that the chamber (1) is quadrilateral in the pixel cross-section of the gear.

4. Gear according to one of Claim 1 to 3, characterised in that the running surfaces (40e, 44b, 59a, 59b) adjacent to one another are disposed substantially at right angles to one another.

5. Gear according to one of Claims 1 to 4, characterised in that the output member (50) and/or the main body member (40) is provided with a circumferential step (59) in the area of the bearing, the walls of said step defining the running surfaces (59a, 59b)..

6. Gear according to one of Claims 1 to 5, characterised in that the step (59) is offset against the axis (40a) of the gear.

7. Gear according to one of Claims 1 to 6, characterised in that a step (59', 59'') is formed in the main body member (40) and/or in the output members (50), which is supplementary to the step (59).

8. Gear according to one of Claims 1 to 7, characterised in that the radially running surface (44b) disposed opposite the radially orientated running surface (59b) of the output member (50) is part of a ring (44) disposed in the gear.

9. Gear according to Claim 8, characterised in that the radial thickness of the ring (44) is greater than the radial height of the chamber (1).

10. Gear according to one of Claims 1 to 9 with cylinder-shaped rolling bodies (47, 47'), characterised in that the axial length of the rolling bodies (47, 47') is smaller than its diameter.

11. Gear according to one of Claims 1 to 10, characterised in that between every two adjacent rolling bodies (47, 47'), there is disposed a positioning member (49), which preferably has at least one opening(2) for lubricants.

12. Gear according to Claim 11, characterised in that the positioning member (49) has concave rolling surfaces (49a, 49b) which form a positive fit with the rolling bodies (47, 47').

13. Gear according to Claim 12, characterised in that the axes of the rolling surfaces (49a, 49b) run parallel to the axes of the rolling members (47, 47') allocated to them.

14. Gear according to one of Claims 11 to 13, characterised in that that the other surfaces (49c, 49d, 49e) of the positioning members (49) are disposed at a distance from the running surfaces (40e, 44b, 59a, 59b).

15. Gear according to one of Claims 1 to 14, with at least one main body member (40) formed as a wheel with internal toothing (41), with at least one output member (50) rotatably mounted in relation to the wheel, and an input shaft (10) with at least one eccentric section (17), on which at least one wheel (30) is rotatably mounted, with external toothing (39), meshing with the inner toothing (41), in which situation a member (70) is disposed between the wheel (30) and the output member (50), said member transforming the planetary movements of the wheel (30) into rotational movements of the output member (50).

16. Gear according to Claim 15 with two output members (50, 50) disposed at a distance from one another, which are capable of being connected to one another in a rotationally-resistant manner.

17. Bearings for gears according to one of Claims 1 to 16 with cylinder-shaped rolling bodies (47, 47') which are disposed in a chamber (1) of the gear (40e, 44b, 59a, 59b), characterised in that some of the rolling bodies (47) are disposed substantially axially in relation to the axis of rotation (40a) of the gear, while the other rolling bodies (47') are positioned substantially radially.

18. Bearing according to Claim 17, characterised in that a positioning member (49) is disposed between every two adjacent rolling members (47, 47') in each case.

**19.** Bearing according to Claim 18, characterised in that the positioning member (49) consists of plastics material or metal.

**Revendications**

**1.** Boîte de vitesses, en particulier une boîte de vitesses épicycloïdale, avec un élément de base (40), avec un élément de sortie (50) monté à rotation axialement et radialement, ainsi qu'avec au moins une chambre de roulement (1) pour des éléments de roulement (47, 47') substantiellement cylindriques avec des axes de rotation diversement orientés, où certains éléments de roulement (47) sont orientés dans une direction approximativement parallèle à l'axe principal (40a) de l'élément de base (40), tandis que les autres éléments de roulement (47') sont orientés dans une direction approximativement perpendiculaire à l'axe (40a), et où la chambre de roulement (1) est pourvue de surfaces de roulement (40e, 44b, 59a, 59b), caractérisée en ce que, dans la chambre de roulement (1), les éléments de roulement (47, 47') sont alternativement croisés et que la distance entre les surfaces de roulement (40e, 44b, 59a, 59b) qui se font face correspond approximativement au diamètre de l'élément de roulement (47, 47').

**2.** Boîte de vitesses suivant la revendication 1, caractérisée en ce que les éléments de roulement (47, 47') mutuellement contigus sont alternativement croisés.

**3.** Boîte de vitesses suivant la revendication 1, caractérisée en ce que la chambre de roulement (1), dans la coupe transversale axiale de la boîte de vitesses, est rectangulaire.

**4.** Boîte de vitesses suivant l'une quelconque des revendications 1 à 3, caractérisée en ce que les surfaces de roulement (40e, 44b, 59a, 59b) mutuellement contiguës sont, l'une par rapport à l'autre, substantiellement perpendiculaires.

**5.** Boîte de vitesses suivant l'une quelconque des revendications 1 à 4, caractérisée en ce que l'élément de sortie (50), et/ou l'élément de base (40) présentent, dans la zone du palier, un gradin (59) faisant tout le tour et dont les parois définissent les surfaces de roulement (59a, 59b).

**6.** Boîte de vitesses suivant l'une quelconque des revendications 1 à 5, caractérisé en ce que le gradin (59) est en retrait en direction de l'axe (40a) de la boîte de vitesses.

**7.** Boîte de vitesses suivant l'une quelconque des revendications 1 à 6, caractérisée en ce que, dans l'élément de base (40), et/ou dans l'élément de sortie (50), est formé un gradin (59', 59'') complémentaire par rapport au gradin (59).

**8.** Boîte de vitesses suivant l'une quelconque des revendications 1 à 7, caractérisée en ce que la surface de roulement radiale (44b) faisant face à la surface de roulement (59b) de l'élément de sortie (50) s'étendant en direction radiale est une partie d'un anneau (44) disposé dans la boîte de vitesses.

**9.** Boîte de vitesses suivant la revendication 8, caractérisée en ce que l'épaisseur radiale de l'anneau (44) est supérieure à la hauteur radiale de la chambre de roulement (1).

**10.** Boîte de vitesses suivant l'une quelconque des revendications 1 à 9 avec des éléments de roulement (47,47') cylindriques, caractérisée en ce que la longueur axiale des éléments de roulement (47,47') est inférieure à leur diamètre.

**11.** Boîte de vitesses suivant l'une quelconque des revendications 1 à 10, caractérisé en ce qu'entre deux éléments de roulement (47, 47') contigus est chaque fois interposé un élément de positionnement (49), qui présente de préférence au moins un orifice (2) destiné à des lubrifiants.

**12.** Boîte de vitesses suivant la revendication 11, caractérisée en ce que l'élément de positionnement (49) présente des surfaces de roulement (49a, 49b) concaves en contact avec les éléments de roulement (47, 47') grâce à la complémentarité de leurs formes.

**13.** Boîte de vitesses suivant la revendication 12, caractérisée en ce que les axes des surfaces de roulement (49a, 49b) sont parallèles aux axes des éléments de roulement (47, 47') correspondants.

**14.** Boîte de vitesses suivant l'une quelconque des revendications 11 à 13, caractérisée en ce que les autres surfaces (49c, 49d, 49e) des éléments de positionnement (49) sont disposés à une certaine distance des surfaces de roulement (40e, 44b, 59a, 59b).

**15.** Boîte de vitesses suivant l'une quelconque des revendications 1 à 14, avec au moins un élément de base (40) en forme de roue avec une denture intérieure (41), avec au moins un élément de sortie (50) monté à rotation par rapport à la roue, ainsi qu'avec un arbre d'entrée (10) avec au moins un tronçon excentrique (17) sur lequel est montée à rotation au moins une roue (30) à denture extérieure (39) en engrènement avec la denture intérieure (41), et où, entre la roue (30) et l'élément de sortie (50), est disposé un élément (70) transformant les mouvement planétaires ou épicycloïdaux de la roue (30) en des mouvements de rotation de l'élément de sortie (50).

**16.** Boîte de vitesses suivant la revendication 15, avec deux éléments de sortie (50, 50) disposés à une certaine distance l'un de l'autre, et qui peuvent être solidarisés de telle manière qu'ils ne peuvent tourner l'un par rapport à l'autre.

**17.** Boîte de vitesses suivant l'une quelconque des revendications 1 à 16 avec des éléments de roulement (47, 47') cylindriques disposés dans une chambre de roulement (1) de la boîte de vitesses, avec des surfaces de roulement (40e, 44b, 49a, 59b), caractérisée
en ce que certains des éléments de roulement (47) sont orientés dans une direction approximativement axiale par rapport à l'axe de rotation (40a) de la boîte de vitesses, tandis que les autres éléments de roulement (47') sont orientés dans une direction approximativement radiale.

**18.** Boîte de vitesses suivant la revendication 17, caractérisée
en ce qu'entre deux éléments de roulement (47, 47') contigus est chaque fois interposé un élément de positionnement (49).

**19.** Boîte de vitesses suivant la revendication 18, caractérisée
en ce que l'élément de positionnement (49) est en matière plastique ou en métal.

Fig. 1

Fig. 3

Fig. 2

Fig. 4

Fig. 5

EP 0 854 987 B1

Fig. 7

Fig. 6

Fig. 8b

49

2

Fig. 8

49a

49b

2

Fig. 8a